(19) **Europäisches Patentamt**

**European Patent Office**

**Office européen des brevets**

(11) **EP 0 808 070 B1**

(12) **EUROPEAN PATENT SPECIFICATION**

(45) Date of publication and mention
of the grant of the patent:
**26.10.2005 Bulletin 2005/43**

(51) Int Cl.$^7$: **H04N 5/44**

(21) Application number: **97303218.8**

(22) Date of filing: **12.05.1997**

(54) **Image signal processor and processing method**

Bildsignalprozessor und Verarbeitungsverfahren

Processeur de traitement d'image et méthode de traitement

(84) Designated Contracting States:
**DE ES FR GB**

(30) Priority: **17.05.1996 JP 14649896**

(43) Date of publication of application:
**19.11.1997 Bulletin 1997/47**

(73) Proprietor: **SONY CORPORATION**
**Tokyo 141 (JP)**

(72) Inventors:
• **Izumi, Nobuaki, c/o Intellectual Prop. Dep.**
**Shinagawa-ku, Tokyo 141 (JP)**
• **Fukushima, Shinichi, c/o Intellectual Prop. Dep.**
**Shinagawa-ku, Tokyo 141 (JP)**

• **Tsukamoto, Junichi, c/o Intellectual Prop. Dep.**
**Shinagawa-ku, Tokyo 141 (JP)**

(74) Representative: **Turner, James Arthur et al**
**D Young & Co**
**120 Holborn**
**London EC1N 2DY (GB)**

(56) References cited:
**US-A- 4 679 084**     **US-A- 5 226 114**

• **MALCHER D ET AL: "TV-MULTIMEDIA-PC ARBEITEN, INFORMIEREN UND UNTERHALTEN OHNE GRENZEN" FERNSEH UND KINOTECHNIK, vol. 50, no. 3, 1 March 1996, pages 104-109, XP000581419**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

This invention relates to image signal processors and processing methods.

Recently, a computer, so-called a personal computer is widely spreading. As the application modes of such computer, an image data obtained externally is displayed for appreciation on a monitor unit connected to the computer or various processes are applied to the image data fetched by making use of software applications for image processing for the personal pleasure or such image data are used for publications, etc.

Moreover, a so-called digital VTR (including digital cam-corder) which can record and reproduce an image information of moving image using a digital signal is also spreading widely as a home appliance and such digital VTR can obtain the image signal which is higher in the quality than that of the VTR for recording and reproducing the analog image signal.

When such situation is considered as the background, it is naturally thought that the images picked up or reproduced by a digital video camera or a digital VTR are fetched into the computer to for personal amusement or industry.

However, in the case of capturing the moving image picked up or reproduced by digital VTR into the computer as a stationary image, an image file is formed in unit of frame, but, in this case, image data in each of the first and second field which are obtained by the interlace conversion changes to a large extent in the intensively moving part.

Therefore, an image file is formed under the condition deteriorated by time deviation of the first and second fields. When such image file is read and displayed, deviation between fields appears as stripes, resulting in the problem that the reproduced image is deteriorated considerably from the original image.

United States Patent No US-A-5 226 114 discloses an image signal processor and method generally according to the pre-characterising parts of claims 1 and 3 hereof.

MALCHER D ET AL, 'TV-MULTIMEDIA-PC ARBEITEN, INFORMIEREN UND UNTERHALTEN OHNE GRENZEN', FERNSEH UND KINOTECHNIK, viol.50, no.3, 1 March 1996, pages 104-109, XP000581419, discloses sending video data from a camera to a PC and capturing the data on a hard disc.

The present invention provides an image signal processor according to claim 1 hereof and an image signal processing method according to claim 3 hereof.

Using these techniques, stripes appearing at an area near the boundary of a stationary part and a moving part can be reduced by executing the interpolating process to the stationary image including the moving part, whereby a clear stationary image can be obtained.

In addition, since the motion detecting coefficient for executing the field interpolation process can be set freely depending on the condition of the moving part, adequate interpolation processes can be executed for various stationary images, and high quality stationary images can be obtained.

The invention will now be described by way of example with reference to the accompanying drawings, throughout which like parts are referred to by like references, and in which:

Fig. 1 is a block diagram showing an example of structure of an image extracting system as an embodiment of the present invention;

Fig. 2 is an explanatory diagram showing operation example for extracting image on the display screen of a monitor unit;

Figs. 3A and 3B are explanatory diagrams showing an image file structure;

Figs. 4A - 4C are explanatory diagrams schematically showing pixels of an image file;

Figs. 5A and 5B are schematic diagrams for explaining a moving part of the image file;

Figs. 6A and 6B schematically illustrate decoding and de-interlacing apparatus;

Figs. 7A and 7B are diagrams schematically showing outline of the field interpolation process;

Figs. 8A and 8B are explanatory diagrams showing an example of operation for the motion detecting and field interpolating process on the display screen of the monitor unit; and

Fig. 9 is a diagram showing an example of operation for motion detection and field interpolating process through a flowchart.

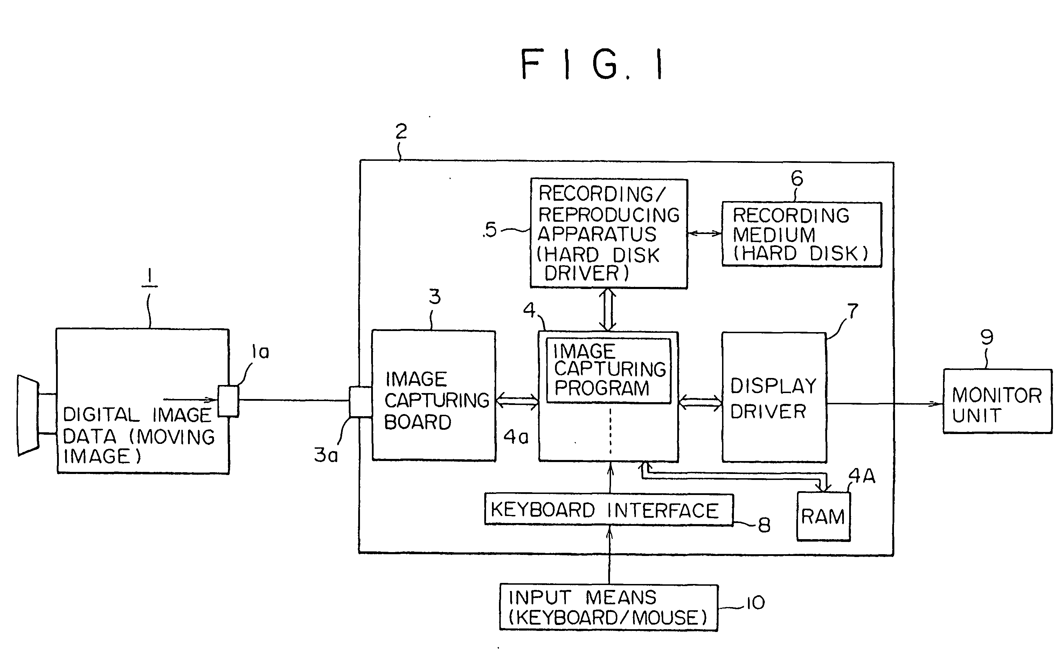

The preferred embodiments of the present invention will be explained with reference to Fig. 1 to Fig. 9.

Explanation will be made in the sequence indicated below.

1. Example of structure of image extracting system depending on the preferred 'embodiment:
2. Example of image extracting operation:
3. Stationary image data file format depending on the preferred embodiment:
4. Operation of motion detection and field interpolating process:
5. Operation for executing motion detection and field interpolation:

## 1. Example of Structure of Image Extracting System Depending on Preferred Embodiment

Fig. 1 is a block diagram showing an example of structure of an image extracting system. In this figure, a computer system is formed of a personal computer which can capture image data of digital VTR and a monitor unit which is connected to the personal computer for the display.

In this case, the digital VTR 1 is constituted as a digital cam-corder and the image picked up, for example, can be recorded in direct as the digital image signal of moving picture to a tape-shaped recording medium such as 8 mm tape cassette. This digital VTR 1 can output in direct the image information reproduced from the tape-shaped recording medium and picked up image information as the digital signals via the digital image signal output terminal (hereinafter referred only to as DV terminal) 1a. A format of the image data outputted from the digital VTR 1 will be explained later.

A computer 2 is constituted, in this case, to capture at least a stationary image from image data supplied from the digital VTR 1 and generates a data file of stationary image for the purpose of storing. Moreover, the computer 2 is capable of displaying the data file of stationary image generated.

The computer 2 is also provided with a image capturing board 3 which is structured to capture the image data supplied from the digital VTR 1. This image capturing board 3 is provided with a DV terminal 3a to input the image data of digital VTR 1. Namely, in the system of this embodiment, the digital moving image data can be input in direct to the computer by transferring the image data via the DV terminal. As the data transfer network between the digital VTR 1 and computer 2, the specifications, for example, of IEEE1394 can be employed.

A control means 4 is provided with a CPU (Central Processing Unit) to execute various processing controls to realize a variety of operations of the computer 2. In this case, an image capturing/displaying program 4a is installed as the software for realizing image capturing through the image capturing board 3 explained above. For instance, the image capturing board 3 and image capturing/ displaying program 4a are offered as a set to users.

The image capturing/displaying program 4a generates the image data to be displayed on the monitor unit 9 by executing the predetermined demodulation process to the image data supplied from the image capturing board 3 or to the image data which has been once written into the recording medium via the image capturing board 3. In addition, the field interpolation can be executed as required depending on the motion detection to the image data written into the recording medium. Moreover, as will be explained, the display format for setting coefficient of motion detection is formed and is then outputted.

RAM 4 stores the data to be processed by the control means and information as a result of arithmetic operation.

A recording/reproducing unit 5 is formed as a data recording/reproducing unit for driving a recording medium to store various pieces of information including data files. In this embodiment, the recording/reproducing unit 5 will be explained hereunder as a comprised hard disc driver, but it can naturally be designed as a driver for the removable hard disc, floppy disc and other various external memory devices.

A recording medium 6 is loaded to the recording/reproducing unit 5 for the purpose of data writing and reading operation. In this embodiment, a hard disc is used but other memory media may be used as in the case of the recording/reproducing unit 5 explained above.

A display driver 7 converts the image information to be displayed on the monitor unit 9 depending on the operation instruction of the control means 4 to, for example, the RGB signal and then outputs this signal to the monitor unit 9. The monitor unit 9 executes the image display with the RGB signal supplied from the display driver 7.

The computer 2 is connected, like an ordinary personal computer, with, for example, a keyboard and a mouse, etc. as the input units 10. Manipulation information of the input unit 10 is supplied to the control unit 4 via the keyboard interface 10 of the computer 2. The control means 4 executes the processing operations as required depending on the inputted manipulation information.

## 2. Example of image capturing operation

Next, example of user operation for actually capturing an image using the computer system shown in Fig. 1 will be explained.

A user connects the digital VTR and computer having expanded the image capturing board 3 using a cable through the DV terminals 1a, 3a as shown in Fig. 1. The image capturing/displaying program 4a is activated by executing the predetermined keying operations with the input unit 12 to the computer 2. Thereby, the image capturing system as this embodiment can be started.

When it is assumed that a user starts the reproducing operation of the digital VTR 1 under this condition, the reproduced image information is supplied as the digital signal to the side of computer 2 via the DV terminals 1a, 3a.

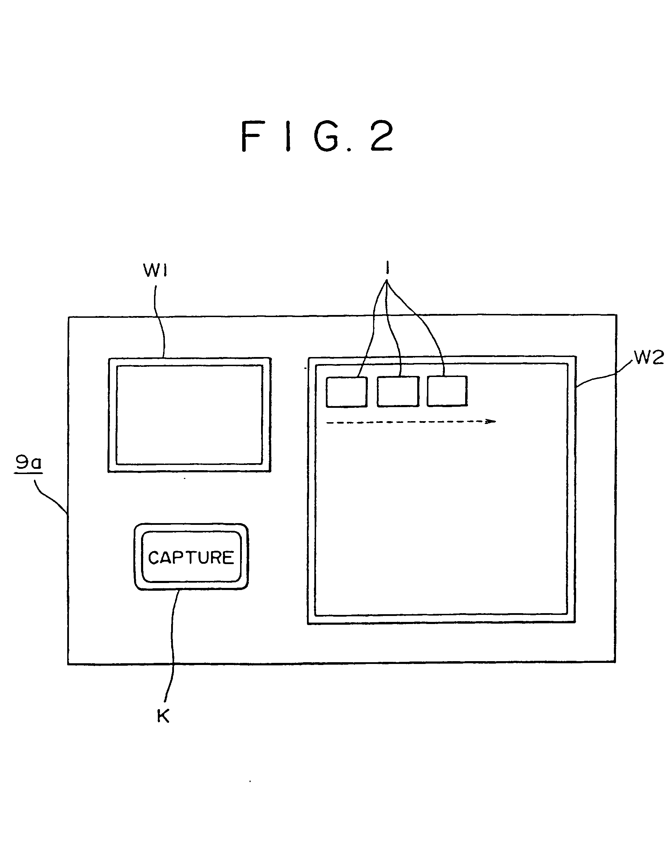

Here, Fig. 2 shows an example of display format for image capturing displayed on the display means 9a of the monitor unit when the image capturing/displaying program 4a is started.

For example, when the reproducing operation of the digital VTR 1 is initiated as explained above, the image capturing/displaying program 4a generates a display image information to capture, as the stationary image, the frame of the predetermined timing of the image data transmitted and displays this information in the VTR image display window W1 of the upper right side display region of Fig. 2. Therefore, in the VTR image display window W1, the image which is now reproduced by the digital VTR 1 is displayed almost like the moving image.

A user designates, while viewing the VTR image display window W1, the display of the desired image to be captured and moves the cursor, for example, not illustrated to a part of the image capturing key display K showing an image of the image capturing key and then executes the entering operation through the click of mouse.

Thereby, the image capturing/displaying program 4a captures the frame of the image being displayed in the VTR image display window W1 when the designating operation explained above is executed as the data file of stationary image and then writes this file data, for example, to the recording medium 6.

Moreover, a region of the capturing image display window W2 is provided and an image file icon I showing data file of stationary image generated depending on above operations is displayed in this region depending on the capturing sequence so that a user can detects the capturing situations of the data file of stationary image obtained as explained above.

3. Format of stationary image data file depending on the embodiment:

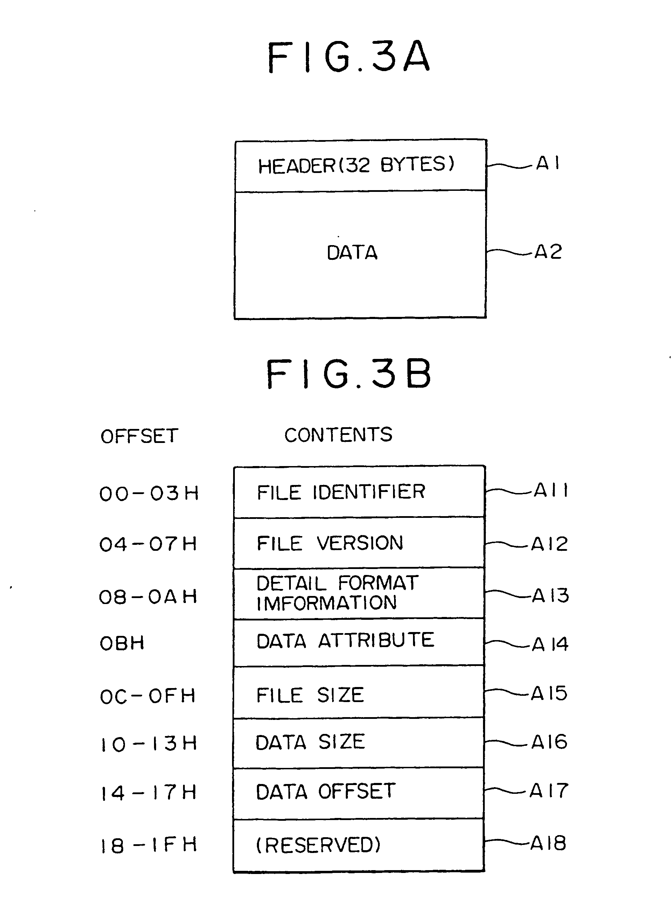

The frame data which is designated to be captured as the data file of stationary image as explained in Fig. 2 is converted, as explained with reference to Fig. 3, to the format of the data file of stationary image (hereinafter referred to as only image file). Acquisition of data file from stationary image can be realized by the image capturing/displaying program 4a.

Fig. 3A shows a data format of image file of one frame of stationary image. This image file is provided with a header area A1 following the header of 32 bytes at the leading edge. In this header area A1, data are actually arranged with Big Endian in unit of 4 bytes. Various pieces of the file management information (described later in Fig. 3B) required for management of image files recorded on the recording medium are stored in this area.

Subsequently, the data area A2 for image data is provided for arrangement of data with Big Endian in unit of 2 bytes.

The data area A 2 is the image data region of one frame. In the case of the SD525 format corresponding to the NTSC system, the block data arranging 149 blocks (1 block = 80 bytes) in one track is sequentially arranged in 10 tracks in total from track 0 to track 9. In the case of the SD625 format corresponding to PAL system, 149 block data is sequentially arranged in the 12 tracks from track 0 to track 11.

Therefore, the data size of image file in this embodiment is fixed in length. In the SD525 format, the data size is fixed to 119232 bytes (= 32 (bytes) + 149 x 80 (bytes) x 10). In the SD625 format, the data size is fixed to 143072 bytes (= 32 (bytes) + 149 x 80 (bytes) x 12).

As explained above, the image data outputted from the digital VTR 1 via the DV terminal 1a is compressed by the predetermined compression system.

However, as will be understood from above explanation, the image file of this embodiment is formed by providing a header to the data of one frame of the compressed image data. Therefore, the size of the image file becomes as mall as explained above and accordingly the recording capacity of the recording medium for recording the image file can be used effectively.

Fig. 3B shows a data format of the header area A1. As shown in Fig. 3B, the header area A1 of 32 bytes is composed, from the leading edge, of a file identifier area A11, a file version area A12, a detail format information area A13, a data attribute area A14, a file size area A15, a data size area A16, a data offset area A17 and an undefined area A18 (8 bytes).

The file identifier area A11 is the file identifier code region consisting of 4 bytes of ASCII code for the file identification. For example, this file identification area A11 is fixed by "DVF", for example, in the system of this embodiment.

The file version area A12 is composed of 4 bytes of ASCII code to specify the file version. For example, in the case of version 1.00, this area is defined as "1.00".

The detail format information area A13 indicates a different format depending on the television system explained above and is expressed by 3 bytes of ASCII code. In the case of SD525 format, this detail format information is defined by "SD5" and in the case of the SD625 format, it is defined by "SD6".

In above explanation, this embodiment corresponds only to the SD525 format and SD625 format, but four kinds of formats of SDL525 format, SDL625 format, HD1125 format (corresponding to the high definition NTSC system), HD1250 format (corresponding to the high definition PAL system) are also defined in addition to such two formats and are respectively indicated as "SL5", "SL6", "H11", and "H12".

The data attribute area A14 is the region in which the information indicating attribute in relation to the predetermined image file is stored with the data of one byte.

The file size area A15 indicates the total data size of one image file with 4 bytes of the straight binary. Since the data size of the image file based on the SD525 format is fixed, as explained above, to 119232 bytes, this 119232 bytes is expressed as "0001D1C0" by the hexadecimal notation. Moreover, the data size of the image file based on the SD625 format is fixed to 143072 bytes and it is therefore expressed as "00022EE0" by the hexadecimal notation.

The data size area A16 indicates the size of data area A2 in one image file with 4 bytes of straight binary. In the case of SD525 format, the size is defined as "0001D1A0" by the hexadecimal notation indicating 119200 (119232 - 32 = 19200) bytes. In the case of SD625 format, the size is defined as "00022EC0" by the hexadecimal notation indicating 143040 (143072 - 32 = 143040) bytes.

The data offset area A17 specifies offset (namely, defined as the area from the data leading position of one image file to the ending area of the header area A1) of header area A1 to the data area 2 with 4 bytes of straight binary. In this case, it is defined as "00000020" which is equal to 32 bytes in the hexadecimal notation.

When it is required in future to increase the content item to be defined in the header area A1 and thereby the header area A1 is required to be increased exceeding 32 bits, the data offset area A17 is changed depending on the data size of the header area A1 changed. Accordingly, flexibility is provided corresponding to change of format in future.

The image capturing/displaying program 4a generates an image file from the image data captured based on the format explained with reference to Fig. 3. That is, this program 4a adds the header (header area A1) to the frame data supplied to the control means 4 of the computer 2 from the image capturing board 3 by setting the definition content of each area corresponding to the type (NTSC system/PAL system) of image supplied to generate the image file having the format shown in Fig. 3A. An adequate file name is given to the image file generated as explained above and it is then written into the recording medium 6 for the storing purpose.

4. Motion detecting, field interpolating operation

When an image including moving part is recorded as an image file to a recording medium 6, oscillation is generated in some cases in the image displayed.

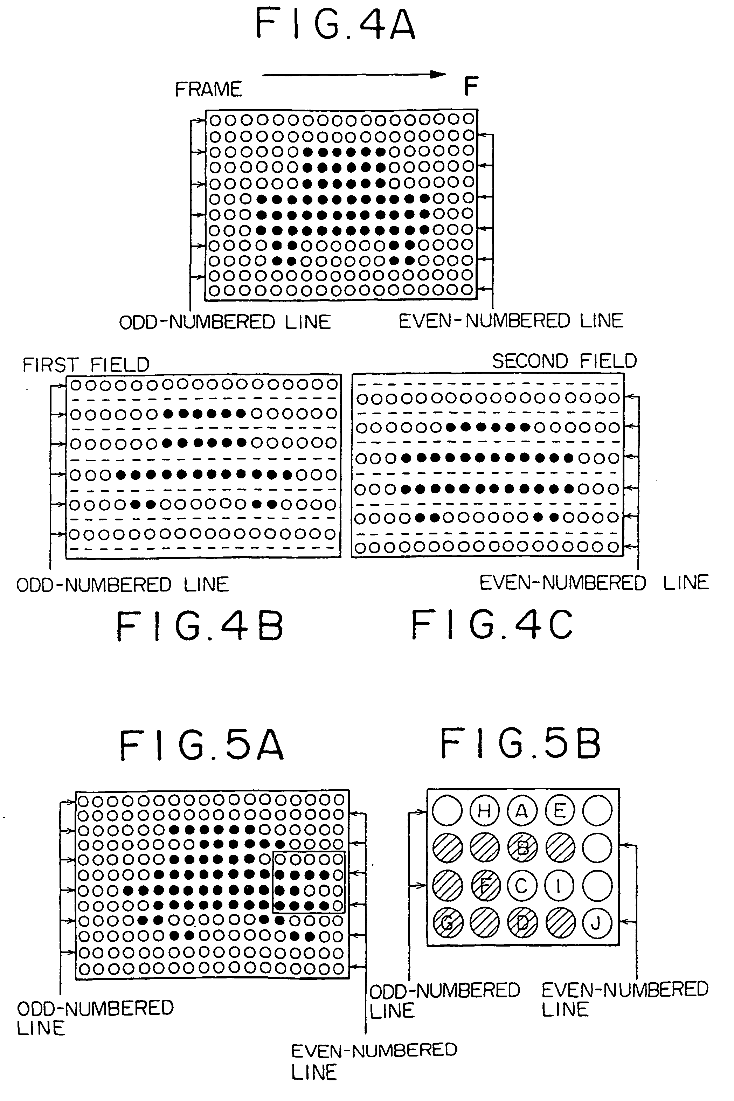

Fig. 4 schematically shows respective pixels of an image data (for example, an automobile) recorded as the image file. The pixels forming the scanning line are indicated by circles.

Fig. 4A indicates an image data of one frame; Fig. 4B indicates an image data of the odd number lines (first field) of one frame indicated in Fig. 4A and Fig. 4C indicates an image data of the even number lines (second field). Namely, the image data of one frame is structured by each field data indicated in Fig. 4B and Fig. 4C.

When an image of automobile shown in Fig. 4A is captured in the condition that it is stopping, since the moving part is not included, the image of automobile is displayed almost in the same position in the first and second fields shown in Fig. 4B and Fig. 4C.

However, when an image of the automobile under the condition that the image is running in the direction indicated by the arrow mark F of Fig. 4A, the positions of automobile in the first and second fields are deviated in the direction indicated by the arrow mark F. Namely, when the image including the moving part is captured, the image data of one frame is deviated for each line due to the time difference between the first field (odd number lines) and second field (even number lines) as shown in Fig. 5A and such condition is recorded in the recording medium 6. Therefore, if such image is displayed on the monitor unit 9, it is difficult to obtain the high quality image because the image near the threshold values of the background and automobile (contour of automobile) becomes rough.

Therefore, motion detection is performed for the image file recorded in the recording medium 6 in the condition shown in Fig. 5A and the deviation between the fields of the moving part is interpolated by the field interpolation.

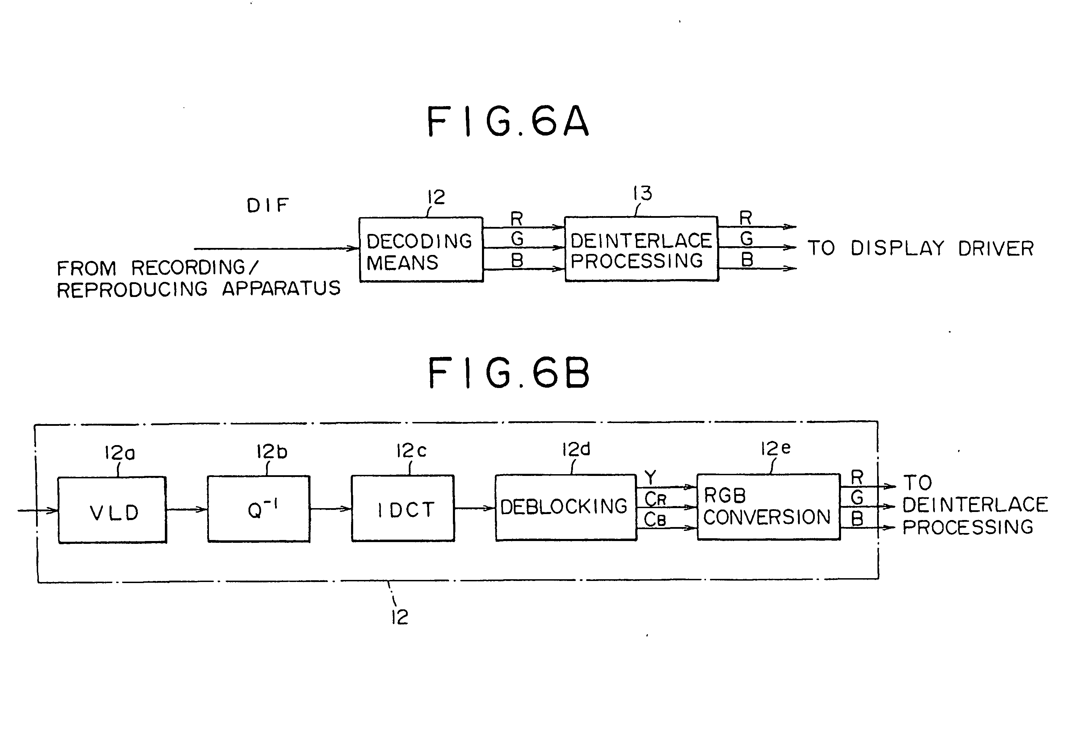

Fig. 6 schematically shows an example of the image processing block in the image capturing/displaying program 4a. Fig. 6A shows a decoding means 12 and a deinterlace processing means 13, while Fig. 6B shows details of the decoding means 12 shown in Fig. 6A.

The image file read from the recording medium 6 is demodulated, as shown in Fig. 6A, as the RGB signal through the predetermined decoding process in the decoding means 12 and the motion detection and field interpolation process are performed in the deinterlace processing means 13 provided in the subsequent stage. The RGB signal having completed the interpolation process is then supplied to the display driver 7 shown in Fig. 1.

As shown in Fig. 6B, the decoding means 12 is formed of a variable length decoding section 12a, an inverse quantizing section 12b, IDCT (Inverse Discrete Cosine Transfer) section 12c, a deblocking section 12d and a RGB converting section 12e for converting Y, Cb and Cr signals to the R, G, B signals.

The variable length decoding section 12a decodes the variable length encoded data which is read from the recording medium 6 and is processed by, for example, the Run-length coding or Huffman coding method and then outputs the decoded signal to the inverse quantizing section 12b.

The inverse quantizing section 12b generates a coefficient data by setting the predetermined quantizing step (multiplication coefficient) for the variable length encoded data decoded by the variable length decoding section 12a and then executing the multiplication. The IDCT section 12c forms and outputs the data of the DCT block format of 8 x 8 pixels on the basis of the coefficient data generated by the inverse quantizing section 12b. The deblocking section 12d converts the data of DCT block format supplied from the IDTC section 12c into the luminance signal and color difference signal (Y, Cr (R-Y), Cb(B-Y) in the sequence of the interlace scanning.

The luminance signal and color difference signal outputted from the deblocking section 12d are converted to the RGB signal in the RGB converting section 12e and is then supplied to the deinterlace processing means 13 shown in Fig. 6A. The deinterlace processing means 13 executes the motion detection and field interpolation processes to the RGB signal inputted.

As an example of motion detecting operation, the image data shown in Fig. 5A will be explained. Fig. 5B shows the enlarged view of 20 pixels surrounded by a solid line in the image data of Fig. 5A. Moreover, the pixels compared for the motion detecting process are given the signs A and C to J. An example of motion detection of the pixel B among these pixels, for example, from the motions in the horizontal and oblique directions and field difference will be explained.

In the case of detection whether the pixel B moves in the horizontal direction or not, the following arithmetic operation is executed.

$$(A - B) \times (B - C) < K \qquad (1)$$

or

$$(B - C) \times (C - D) < K \qquad (2)$$

When both expressions (1), (2) are satisfied, the pixel B is assumed as being moving in the horizontal direction.

Moreover, in the case of detection of the pixel B in the oblique direction, following arithmetic operation is performed.

$$(E - B) \times (B - F) < K \qquad (3)$$

or

$$(B - F) \times (F - G) < K \qquad (4)$$

When both expressions (3), (4) are satisfied, the pixel B is assumed as being moving in the oblique direction.

Moreover, for detection of motion from the difference of fields, when the expression (5) is satisfied, the pixel B is assumed to be moving.

$$| ((A + C)/2) - B | < K2 \qquad (5)$$

Namely, any one of the expressions (1) to (5) is satisfied, the pixel B is assumed to be moving and the field interpolation is performed to the pixel B. In the same manner, motion detection is executed to each pixel and thereby the moving pixels in the image data can be detected.

In the expressions, the coefficients K and K2 can be selected, as will be explained later, by user on the edition display format.

Next, the field interpolating process of the pixels of which motion is detected by the motion detecting process will then be explained.

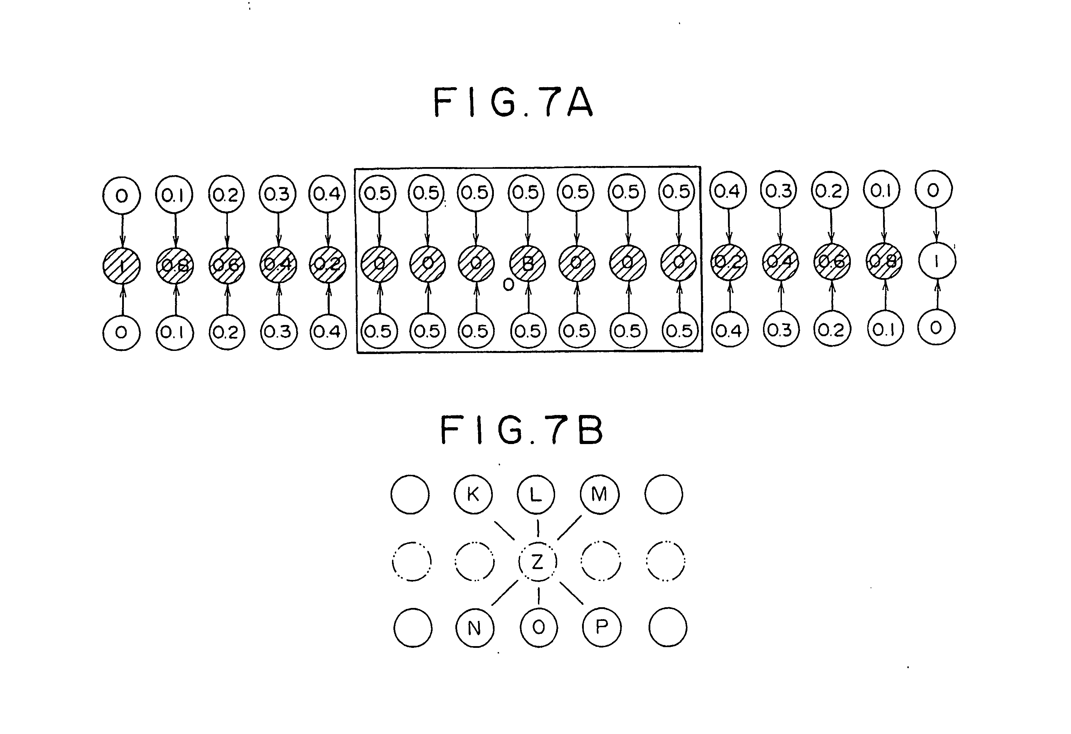

Fig. 7 schematically shows the outline of the interpolation process. Fig. 7A shows the soft switching system, while Fig. 7B the difference minimum value interpolating system.

In the soft switching system shown in Fig. 7A, the perfect interpolating process is executed for the 20 pixels around the pixel B in the moving part surrounded by a solid line in view of compensating the undetected area of the moving portion.

As shown in the figure, the pixel B and the pixels on the same line as the pixel B are perfectly interpolated by the pixel information of the upper and lower lines in the interpolation area. Moreover, for the pixels at the outside of the compensating area, the interpolation process is executed by gradually considering information about the relevant pixel as it becomes far from the pixel B. In this example, the interpolating process is not executed for the pixels isolated from the pixel B by eight or more pixels.

As explained above, the pixels near the pixel B is perfectly interpolated by the peripheral pixels in the interpolating area. Moreover, since the interpolating process is executed in the predetermined rate for the periphery of the interpolating area, smooth display image can be realized by reducing the flickering of display near the threshold value.

When perfect interpolation is to be carried out for the pixels of the moving portion, differences of information about the pixels in the vertical and oblique directions around the pixel to be interpolated are compared, for example, as shown in Fig. 7B and a mean value of the minimum difference values is obtained.

For example, three values of $| K - P |$, $| L - O |$, $| M - N |$ are compared. For example, when ex: $| L - O | < | M - N | < | K - P |$,

$$Z = (L + O)/2.$$

Thereby, the mean value of the pixel N and pixel O is defined as the value of the pixel Z.

As explained above, more precise pixel information can be obtained from the upper, lower and oblique pixels by executing the perfect interpolating process to the pixel (for example, pixel Z) of which motion has been detected.

5. Operation for executing motion detection and field interpolation

Outline of the user operation by the graphical user interface in such a case that a user executes the motion detection and interpolation process as explained above will be explained.

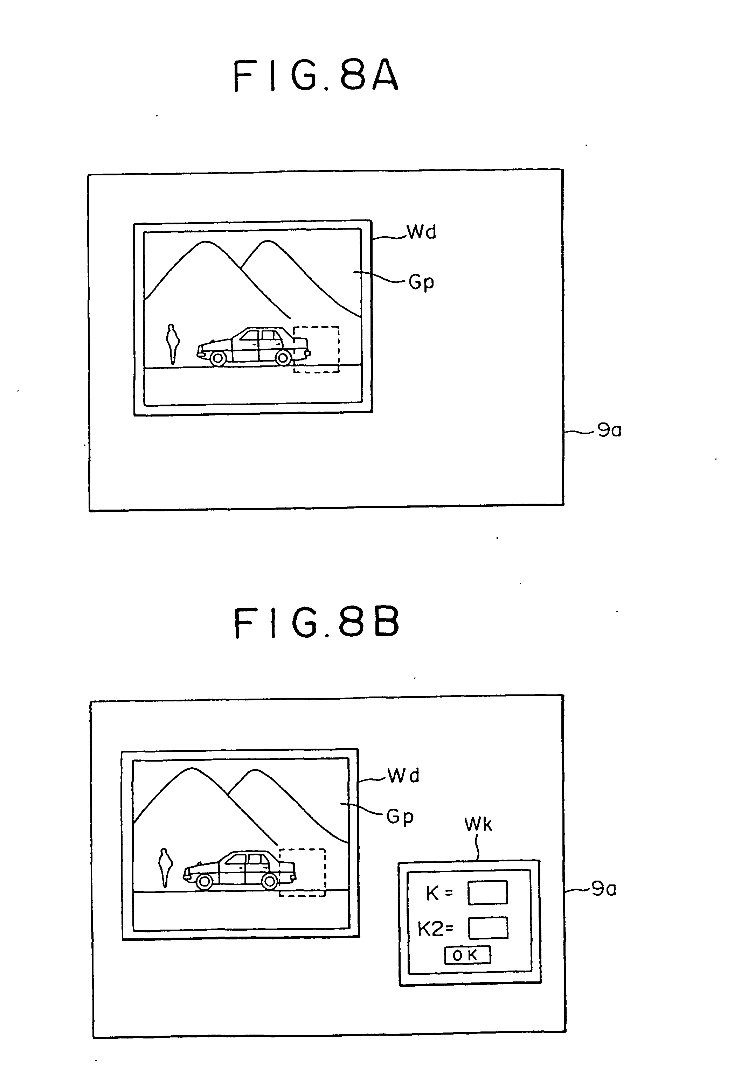

Fig. 8 shows the condition that the image file read from the recording medium 6 is displayed on the display means 9a of the monitor unit 9.

When the desired one is selected from the image file captured as explained above in regard to Fig. 2, the image file Gp read from the recording medium 6 is displayed in the display window Wd. Under the condition that the image file Gp is displayed in the window Wd, since the stripes appear due to the deviation for each odd/even number lines as shown in Fig. 5A the interpolating region is designated by moving the pointer not illustrated using an input means 10 (for example, mouse).

When the interpolation region is designated, such region (rear portion of an automobile) is displayed, for example, by a broken line as shown in the figure. Namely, a user can select a part of image particularly deteriorated, while viewing the image file Gp displayed on the display means 9a.

After the interpolation region is designated, when the deinterlace processing item is selected with the menu item not illustrated (for example, by display of menu bar, etc.), the field interpolation process is executed after motion of the region surrounded by a broken line is executed. In this case, the coefficients K, K2 for motion detection are set to the value preset to the control means 4.

If the interpolation region is not designated, motion detection and interpolation process are executed for all region of the image file Gp.

Moreover, it is also possible that a user freely sets the coefficients K, K2 depending on the condition of strips in the interpolation region. In this case, when the interpolation region is designated and the deinterlace process item is selected as explained above, the window Wk for setting coefficient is displayed as shown in Fig. 8B. Here, when the "OK" button is clicked after setting the coefficients K, K2, motion is detected depending on the coefficients K and K2 and thereafter the field interpolation process is executed.

Whether a user can set the coefficient K, K2 or not may be set by the preceding selection.

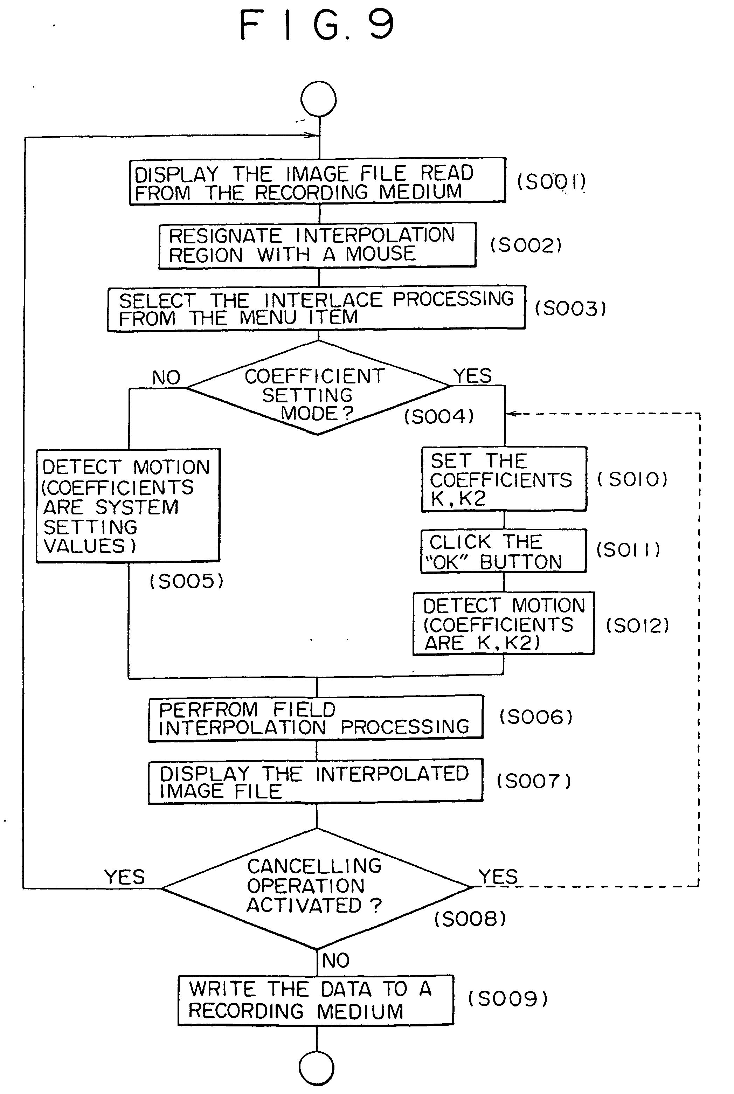

Outline of motion detection and field interpolation process explained with reference to Fig.8A, Fig. 8B will be explained with reference to the flowchart shown in Fig. 9.

First, the desired image file is read from the recording medium 6 and it is then displayed (S001) in the display window Wd of the display means 9a and the region for executing the field interpolation process in this image file is designated by using an input means 10 such as mouse (S002). After the interpolation region is designated, the "interlace process" item is selected from the menu item (S003). Here, when a user does not set the "coefficient setting mode" for setting the coefficient of motion detection depending on the condition of image file (S004), operation goes to the step S005. Here, the motion detection is executed using the values preset in the control means 4 as the coefficients K, K2 (S005) and the field interpolation process is executed for the pixels of which motion is detected for interpolation of pixels of the moving portion (S006).

When the field interpolation process is completed through the steps S005, S006, the interpolated image file is displayed (S007) on the display means 9a as the processing result. When a user judges that the good display can be obtained by viewing the image file displayed on the display means 9a (processing result) (S008), the image file after the field interpolation process is written into the recording medium 6 for the storing purpose by the predetermined operations (S009).

Meanwhile, when a user judges that good display image cannot obtained and cancels the interpolation process (S008), operation returns to the step S001 through the route indicated by a solid line and the original image before the processing (image read from the recording medium 6) is displayed. The motion detection and field interpolation process may be repeated until the good display can be obtained by designating, for example, the other interpolation region.

Moreover, when the "coefficient setting mode" is set (S004), the coefficient setting window Wk is displayed. Here, a user sets the coefficients K, K2 depending on the condition of the image file displayed on the display means 9a (S010). When the "OK" button is clicked (S011) after setting the coefficients K, K2, motion detection is performed (S012) based on the coefficients K, K2 preset in the step S104. The interpolation process is executed for the pixels of which motion is detected (S006).

When the field interpolation process is completed through the steps S012, S006, the interpolated image file is displayed on the display means 9a as the processing result (S007). When a user judges (S008) that good image can be obtained by viewing the image file displayed on the display means 9a (processing result), the interpolated image file is written into the recording medium 6 for the storing purpose (S009).

Meanwhile, when a user judges that good image cannot be obtained and cancels the interpolation process (S008), the operation returns to the step S010 through the route indicated by a broken line. Here, the coefficients K, K2 are set again and thereby the field interpolation process can be executed to the same region. In addition, when it is requested to execute the field interpolation by designating the other region, it can be realized by returning to the step S001 and then designating the interpolation region.

When the good image can be obtained finally, such image is written into the recording medium 6 and is then stored therein (S009).

As explained above, the coefficients K, K2 can be set freely while viewing the image displayed on the display means 9a by setting the "coefficient setting mode" and the field interpolating process can also be realized depending on the condition of image file for the interpolation and liking of a user.

If it is troublesome for a user to set the coefficients K, K2, it is also possible that simplified motion detection is performed using the value preset to the control means as the coefficients K, K2 without setting the "coefficient setting mode" and thereby the field interpolation process is executed.

As explained above, the field interpolation is executed to the stationary image data generated by extracting image data in unit of frame from the digital moving image data externally supplied. Therefore, even when the stationary image data is generated by the frame data including the moving portion, generation of stripes due to deviation of field data can be suppressed by the field interpolation process and good stationary image almost equal to the original image can be obtained.

Moreover, since it is also possible to set the coefficients for motion detection while the coefficient setting format is displayed together with the stationary image data to the monitor unit provided, for example, as the display means for making reference to the stationary image data, the interpolation process suitable for such stationary image data can be executed.

Although preferred embodiments of the present invention have been described and illustrated, it will be apparent to those skilled in the art that various modifications may be made without departing from the terms of the claims.

In summary, embodiments of the invention relate to an image signal processor and processing method to execute frame interpolation to a stationary image information by capturing the stationary image information from a moving image information reproduced, for example, from a digital VTR (Video Tape Recorder), etc.

**Claims**

1. An image signal processor for processing moving image data so as to obtain stationary image data representative of a desired image picture, said processor (2) comprising:

   motion detecting means (13) for detecting motion in an image picture; and
   interpolating means (13) for interpolating the image data in accordance with the motion detection results by use of a predetermined interpolation process;
   the processor (2) being **characterised in that**:

      means (10, 4) is provided for designating a first region in the image picture;
      the motion detecting means (13) is operative to detect motion in the designated first region in accordance with at least one motion detection coefficient (K, K2) that can be set by an operator to a desired value;
      means (4, 7) is provided for causing the interpolated image data to be outputted for display on a display device (9) for observation by an operator; and
      means (4) is provided, operative when the operator determines that the display is unacceptable, for performing one of i) designating a second region in the image picture, detecting motion in the second designated region in accordance with the at least one motion detection coefficient, interpolating the image data in accordance with the motion detection results of the second designated region and causing the latest interpolated image data to be outputted for display on the display device (9) for observation by the operator and ii) resetting at least one said motion detection coefficient, detecting motion in the first designated region in accordance with the at least one reset motion detection coefficient, interpolating the image data in accordance with the latest motion detection results of the first designated region and causing the latest interpolated image data to be outputted for display on the display device (9) for observation by the operator.

2. An image signal processor (2) according to claim 1, comprising means (4) for generating a data file from the moving image data.

3. An image signal processing method for processing moving image data so as to obtain stationary image data representative of a desired image picture, said method comprising the steps of:

   detecting motion in an image picture; and
   interpolating (S006) the image data in accordance with the motion detection results by use of a predetermined interpolation process;
   the method being **characterised by**:

      designating (S002) a first region in the image picture;
      detecting motion in the designated first region in accordance with at least one motion detection coefficient (K, K2) that can be set (S010) by an operator to a desired value;
      causing (S007) the interpolated image data to be outputted for display on a display device (9) for observation by an operator; and
      performing, when the operator determines (S008) that the display is unacceptable, one of i) designating (S002) a second region in the image picture, detecting motion in the second designated region in accordance with the at least one motion detection coefficient, interpolating (S006) the image data in accordance with the motion detection results of the second designated region and causing (S007) the latest interpolated image data to be outputted for display on the display device (9) for observation by the operator and ii) resetting (S010) at least one said motion detection coefficient, detecting motion in the first designated region in accordance with the at least one reset motion detection coefficient, interpolating (S006) the image data in accordance with the latest motion detection results of the first designated region and causing (S007) the latest interpolated image data to be outputted for display on the display device (9) for observation by the operator.

4. An image signal processing method according to claim 3, comprising the steps of:

displaying an operation format;
generating display format information for display on said display device (9);
capturing image data and writing (S009) the same to a recording medium as a stationary data file; and
retrieving a desired stationary data file for use as the image picture.

**Patentansprüche**

1. Ein Bildsignalprozessor zur Verarbeitung von Bewegtbilddaten, um Standbilddaten zu erhalten, welche repräsentativ für eine gewünschte Bildaufnahme sind, wobei der genannte Prozessor (2) umfasst:

ein Bewegungserkennungsmittel (13), um Bewegung in einer Bildaufnahme zu erkennen; und
ein Interpolationsmittel (13), um die Bilddaten in Übereinstimmung mit den Bewegungserkennungsergebnissen zu interpolieren, indem ein vorher bestimmter Interpolationsprozess angewendet wird;

wobei der Prozessor (2) **dadurch gekennzeichnet ist, dass**:

ein Mittel (10, 4) vorgesehen ist, um einen ersten Bereich in der Bildaufnahme zu kennzeichnen;
das Bewegungserkennungsmittel (13) in der Lage ist, Bewegung in dem **gekennzeichneten** ersten Bereich in Übereinstimmung mit mindestens einem Bewegungserkennungskoeffizienten (K, K2) zu erkennen, welcher durch einen Bediener auf einen gewünschten Wert eingestellt werden kann;
ein Mittel (4, 7) vorgesehen ist, um zu veranlassen, dass die interpolierten Bilddaten ausgegeben werden, um sie auf einer Anzeigevorrichtung (9) zur Beobachtung durch einen Bediener anzuzeigen; und
ein Mittel (4) vorgesehen ist, welches funktionsfähig ist, sobald der Bediener bestimmt, dass die Anzeige nicht akzeptabel ist, um auszuführen i) ein Kennzeichnen eines zweiten Bereiches in der Bildaufnahme, ein Erkennen von Bewegung in dem zweiten **gekennzeichneten** Bereich in Übereinstimmung mit mindestens einem Bewegungserkennungskoeffizienten, ein Interpolieren der Bilddaten in Übereinstimmung mit den Bewegungserkennungsergebnissen des zweiten **gekennzeichneten** Bereiches und ein Veranlassen, dass die letzten interpolierten Bilddaten ausgegeben werden, um sie auf einer Anzeigevorrichtung (9) zur Beobachtung durch einen Bediener anzuzeigen, und ii) ein Zurücksetzen mindestens eines genannten Bewegungserkennungskoeffizienten, ein Erkennen von Bewegung in dem ersten **gekennzeichneten** Bereich in Übereinstimmung mit mindestens einem zurückgesetzten Bewegungserkennungskoeffizienten, ein Interpolieren der Bilddaten in Übereinstimmung mit den letzten Bewegungserkennungsergebnissen des ersten **gekennzeichneten** Bereiches und ein Veranlassen, dass die letzten interpolierten Bilddaten ausgegeben werden, um sie auf einer Anzeigevorrichtung (9) zur Beobachtung durch einen Bediener anzuzeigen.

2. Bildsignalprozessor (2) gemäß Anspruch 1, welcher ein Mittel (4) umfasst, um ein Datenfile aus den Bewegtbilddaten zu generieren.

3. Bildsignalverarbeitungsverfahren zur Verarbeitung von Bewegtbilddaten, um Standbilddaten zu erhalten, welche repräsentativ für eine gewünschte Bildaufnahme sind, wobei das genannte Verfahren die Schritte umfasst:

des Erkennens von Bewegung in einer Bildaufnahme; und
des Interpolierens (S006) der Bilddaten in Übereinstimmung mit den Bewegungserkennungsergebnissen, indem ein vorher bestimmter Interpolationsprozess angewendet wird;

wobei das Verfahren **gekennzeichnet ist durch**:

das Kennzeichnen (S002) eines ersten Bereiches in der Bildaufnahme;
das Erkennen von Bewegung in dem **gekennzeichneten** ersten Bereich in Übereinstimmung mit mindestens einem Bewegungserkennungskoeffizienten (K, K2), welcher **durch** einen Bediener auf einen gewünschten Wert eingestellt (S010) werden kann;

das Veranlassen (S007), dass die interpolieren Bilddaten ausgegeben werden, um sie auf einer Anzeigevorrichtung (9) zur Beobachtung **durch** einen Bediener anzuzeigen; und

das Ausführen, sobald der Bediener bestimmt (S008), dass die Anzeige nicht akzeptabel ist, i) eines Kennzeichnens (S002) eines zweiten Bereiches in der Bildaufnahme, eines Erkennens von Bewegung in dem zweiten **gekennzeichneten** Bereich in Übereinstimmung mit mindestens einem Bewegungserkennungskoeffizienten, eines Interpolierens (S006) der Bilddaten in Übereinstimmung mit den Bewegungserkennungsergebnissen des zweiten **gekennzeichneten** Bereiches und eines Veranlassens (S007), dass die letzten interpolierten Bilddaten ausgegeben werden, um sie auf einer Anzeigevorrichtung (9) zur Beobachtung **durch** einen Bediener anzuzeigen und ii) eines Zurücksetzens (S010) mindestens eines genannten Bewegungserkennungskoeffizienten, eines Erkennens von Bewegung in dem ersten **gekennzeichneten** Bereich in Übereinstimmung mit mindestens einem zurückgesetzten Bewegungserkennungskoeffizienten, eines Interpolierens (S006) der Bilddaten in Übereinstimmung mit den letzten Bewegungserkennungsergebnissen des ersten **gekennzeichneten** Bereiches und eines Veranlassens (S007), dass die letzten interpolierten Bilddaten ausgegeben werden, um sie auf einer Anzeigevorrichtung (9) zur Beobachtung **durch** einen Bediener anzuzeigen.

**4.** Bildsignalverarbeitungsverfahren gemäß Anspruch 3, welches die Schritte umfasst:

des Anzeigens eines Arbeitsformates;

des Generierens von Anzeigeformatinformation zur Anzeige auf der genannten Anzeigevorrichtung (9);

des Erfassens von Bilddaten und des Schreibens (S009) derselben auf ein Aufzeichnungsmedium als ein Datenfile mit Standbilddaten; und

des Abfragens eines gewünschten Datenfiles mit Standbilddaten zur Verwendung als Bildaufnahme.

## Revendications

**1.** Processeur de signaux d'images pour le traitement de données d'images animées pour l'obtention de données d'image fixe représentatives d'une image fixe désirée, ledit processeur (2) comprenant:

des moyens (13) de détection de mouvement pour détecter un mouvement dans une image; et

des moyens d'interpolation (13) pour interpoler des données d'image conformément aux résultats de détection de mouvement moyennant l'utilisation d'un processus d'interpolation prédéterminé;

le processeur (2) étant **caractérisé en ce que**:

les moyens (10, 4) sont prévus pour désigner une première région dans l'image;

les moyens (13) de détection de mouvement peuvent agir de manière à détecter un mouvement dans la première région désignée conformément à au moins un coefficient de détection de mouvement (K, K2), qui peut être réglé par un opérateur sur une valeur désirée;

des moyens (4, 7) sont prévus pour provoquer la délivrance des images des données d'image interpolées pour leur affichage sur un dispositif d'affichage (9) pour l'observation par un opérateur; et

des moyens (4) sont prévus, pour agir lorsque l'opérateur détermine que l'affichage est inacceptable, pour exécuter l'une des opérations consistant à i) désigner une seconde région dans l'image, détecter un mouvement dans la seconde région désignée conformément à au moins un coefficient de détection de mouvement, interpoler les données d'image conformément aux résultats de détection de mouvement de la seconde région désignée et provoquer la délivrance des données image interpolées les plus récentes pour un affichage sur le dispositif d'affichage (9) pour l'observation par l'opérateur, et ii) ramener à l'état initial au moins ledit un coefficient de détection de mouvement, détecter un mouvement dans la première région désignée conformément au moins au un coefficient de détection de mouvement de ramenée à l'état initial, interpoler les données d'image conformément aux résultats les plus récents de détection de mouvement de la première région désignée et provoquer la sortie des données d'image interpolées les plus récentes pour leur affichage sur le dispositif d'affichage (9) pour une observation par l'opérateur.

**2.** Processeur de signaux d'images (2) selon la revendication 1, comprenant des moyens (4) pour produire un fichier de données à partir de données d'images animées.

3. Procédé de traitement de signaux d'images pour le traitement de données d'images mobiles pour l'obtention de données d'image fixe représentatives d'une image désirée, ledit procédé comprenant les étapes consistant à:

    détecter un mouvement dans une image; et interpoler (S006) les données d'image conformément aux résultats de détection de mouvement moyennant l'utilisation d'un procédé d'interpolation prédéterminé;

    le procédé étant **caractérisé en ce que**:

    on désigne (S002) une première région dans l'image;

    on détecte un mouvement dans la première région désignée conformément à au moins un coefficient de détection de mouvement (K, K2), qui peut être réglé (S010) par un opérateur sur une valeur désirée;

    on provoque la délivrance (S007) des données d'image interpolées pour leur affichage sur un dispositif d'affichage (9) pour l'observation par un opérateur; et

    lorsque l'opérateur détermine (S008) que l'affichage est inacceptable, on exécute l'une des opérations consistant à i) désigner (S002) une seconde région dans l'image, détecter un mouvement dans la seconde région désignée conformément à au moins un coefficient de détection de mouvement, interpoler (S006) les données d'image conformément aux résultats de détection de mouvement de la seconde région désignée et provoquer (S007) la délivrance de données d'images interpolées les plus récentes pour un affichage sur le dispositif d'affichage (9) pour l'observation par l'opérateur, et ii) ramener à l'état initial (S010) au moins ledit un coefficient de détection de mouvement, détecter un mouvement dans la première région désignée conformément au moins au un coefficient de détection de mouvement de ramenée à l'état initial, interpoler (S006) les données d'image conformément aux résultats les plus récents de détection de mouvement de la première région désignée et provoquer (S007) la sortie des données d'image interpolées les plus récentes pour leur affichage sur le dispositif d'affichage (9) pour une observation par l'opérateur.

4. Procédé de traitement de signaux d'image selon la revendication 3, comprenant les étapes consistant à:

afficher un format d'opération;

générer une information de format d'affichage pour l'affichage sur ledit dispositif d'affichage (9);

capturer l'image de données et écrire (S009) ces données sur un support d'enregistrement sous la forme d'un fichier de données fixes; et récupérer un fichier désiré de données fixes pour son utilisation en tant qu'image.

# F I G. 1

# F I G. 2

W1

I

W2

9a

CAPTURE

K

# FIG.3A

| |
|---|
| HEADER(32 BYTES) ⟶ A1 |
| DATA ⟶ A2 |

# FIG.3B

OFFSET | CONTENTS

| OFFSET | CONTENTS | |
|---|---|---|
| 00-03H | FILE IDENTIFIER | A11 |
| 04-07H | FILE VERSION | A12 |
| 08-0AH | DETAIL FORMAT IMFORMATION | A13 |
| 0BH | DATA ATTRIBUTE | A14 |
| 0C-0FH | FILE SIZE | A15 |
| 10-13H | DATA SIZE | A16 |
| 14-17H | DATA OFFSET | A17 |
| 18-1FH | (RESERVED) | A18 |

# F I G . 4 A

FRAME →  F

ODD-NUMBERED LINE          EVEN-NUMBERED LINE

FIRST FIELD

SECOND FIELD

ODD-NUMBERED LINE          EVEN-NUMBERED LINE

# F I G . 4 B          F I G . 4 C

# F I G . 5 A          F I G . 5 B

ODD-NUMBERED
LINE

ODD-NUMBERED
LINE          EVEN-NUMBERED
LINE

EVEN-NUMBERED
LINE

15

# FIG.6A

DIF

FROM RECORDING/
REPRODUCING APPARATUS → | DECODING MEANS (12) | R G B → | DEINTERLACE PROCESSING (13) | R G B → TO DISPLAY DRIVER

# FIG.6B

| VLD (12a) | → | Q⁻¹ (12b) | → | IDCT (12c) | → | DEBLOCKING (12d) | Y Cr Cb → | RGB CONVERSION (12e) | R G B → TO DEINTERLACE PROCESSING

12

EP 0 808 070 B1

FIG.7A

FIG.7B

# FIG.8A

# FIG.8B

# F I G. 9

```
                    ◯
                    │
    ┌──────────────▶│
    │    ┌──────────────────────────────────┐
    │    │ DISPLAY THE IMAGE FILE READ      │  (S001)
    │    │ FROM THE RECORDING MEDIUM        │
    │    └──────────────────────────────────┘
    │    ┌──────────────────────────────────┐
    │    │ RESIGNATE INTERPOLATION          │  (S002)
    │    │ REGION WITH A MOUSE              │
    │    └──────────────────────────────────┘
    │    ┌──────────────────────────────────┐
    │    │ SELECT THE INTERLACE PROCESSING  │  (S003)
    │    │ FROM THE MENU ITEM               │
    │    └──────────────────────────────────┘
```

COEFFICIENT SETTING MODE ? (S004)

NO — YES

DETECT MOTION (COEFFICIENTS ARE SYSTEM SETTING VALUES) (S005)

SET THE COEFFICIENTS K, K2 (S010)

CLICK THE "OK" BUTTON (S011)

DETECT MOTION (COEFFICIENTS ARE K, K2) (S012)

PERFROM FIELD INTERPOLATION PROCESSING (S006)

DISPLAY THE INTERPOLATED IMAGE FILE (S007)

CANCELLING OPERATION ACTIVATED ? (S008)

YES — YES

NO

WRITE THE DATA TO A RECORDING MEDIUM (S009)